# EUROPEAN PATENT APPLICATION

(11) **EP 1 124 194 A2**
(43) Date of publication of application: **16.08.2001**
(21) Application number: 00306621.4
(22) Date of filing: 03.08.2000
(51) Int. Cl.: G06F 17/60

(54) **Electronic commercial dealing mediating system using internet and advertising method**

(30) Priority: 11.02.2000 KR 0006467; 25.03.2000 KR 1500267; 15.04.2000 KR 1900840; 15.04.2000 KR 1900841
(71) Applicant: Open4U Co., Ltd., Youngdeungpo-gu, Seoul (KR)
(72) Inventor: Shin, Kyu-Sik, 301 Narae Building, Seoul (KR); Kim, Hyun-Seung, Seoul (KR)
(74) Representative: O'Connell, David Christopher

(57) **Abstract**

The present invention relates an electronic commercial dealing mediating system using an Internet. The present invention relates to an advertising method of an Internet, and more particularly to an advertising method using a sliding method so that a plurality of advertising icons can be displayed on a small advertising display.

## Description

### BACKGROUND OF THE INVENTION

### Field of the Invention

The present invention relates an electronic commercial dealing mediating system using an Internet.

The present invention relates to an advertising method using an Internet, and more particularly to an advertising method in which a gift presentation icon is displayed in order for an user to select and which a plurality of moving advertising icons can be in order displayed on a small advertising display.

### Description of the Prior Art

In general, an electronic commercial dealing mediating system is served so that a purchaser is connected to a commercial dealing site in order to select a goods that want to purchase and purchase it by a payment settlement, such as, a credit card, an account transfer.

Accordingly, a seller checks the payment settlement for the selected goods by the purchaser and delivers the selected goods to the purchaser by a home-delivery service.

However, the above-described electronic commercial dealing system has a problem that it is very hard to find the web site for providing a goods list for the particular goods that want to purchase by the purchaser and to compare a price, a quality of the particular goods being sold by the several sellers for the best choice of the purchaser.

Furthermore, because the selected goods is delivered to the purchaser from the seller only after a payment is settled by the purchaser for the goods, it is taken very long time to be delivered the selected goods to the purchaser.

At present, a numerous web sites for serving public message and advertisement or for business are operated on an Internet.

The web cites as the foregoing description are operated by free of charge or low price instead the user must see an advertisement on the monitor serving from the Internet service site.

However, the above described web site has a problem that an advertisement can not be interested by the user thereby an advertising effect can not be increased.

Furthermore, the advertisement is displayed on the fixed position on the monitor thereby not to be increased the effect and only one advertisement can be displayed thereby not to be activated a plurality of advertisements on the monitor by a short time.

To overcome the above-problems, a flash type or a moving image type have been developed for concentrating the user's attention, however, these types have a problem that the user's power of concentration is decreased because of distraction.

### SUMMARY OF THE INVENTION

It is an object of the present invention to provide an electronic commercial dealing mediating system that it is very easy for a purchaser to compare a goods information such as the price, the quality of the goods that want to purchase by a purchaser, and it is possible to achieve a commercial dealing by a real time because of a direct dealing between the purchaser and the seller.

Another object of the present invention is to provide an advertising method that a viewing rate can be increased by using a gift presentation icon on the monitor.

Still other object of the present invention is to provide an advertising method using a sliding technique that an advertising effect can be increased by increasing the power of concentration of the user by activating a plurality of advertising icons on an advertising display.

In order to achieve the above objects, an electronic commercial dealing mediating system of the present invention comprises the steps of:
registering a purchaser and a seller as a member for using a mediating system;
inputting a goods name that want to purchase by the purchaser to a server computer through an Internet after the purchaser selects a type of industry, an item and a selling region for the goods that want to purchase through a program or a connecting window on the web;
transmitting the goods name inputted from the purchaser to the related sellers who sell the goods that want to purchase by the purchaser through the server computer;
inputting the goods information, such as, a selling proviso, the price and so on thereof by the seller when the seller receives the goods name inputted by the purchaser with a sound through the server computer, and inputting a selling proviso of the seller through the memo display;
storing an estimate sheet inputted from the seller by the real time at the server computer based on the purchasing proviso of the purchaser and transmitting it to the purchaser by the real time; and
selecting the goods provided a best proviso to purchase by comparing the selling proviso based on the information inputted from the server computer,
wherein the seller computer can automatically receive the purchaser proviso by the small sized browser while the other program is executed, wherein the goods purchasing step performs that the purchaser message for the selected goods is transmitted to the related seller and the seller communicates with the purchaser for the selling method and the purchaser checks the information provided by the seller to select the best seller and communicates with the best seller by the memo, chatting, electronic mail, telephone, Internet phone(voice/image).

In order to achieve another object an advertising method of the present invention comprises the steps of:
activating an advertising display when the user connects to the web site through an Internet;
checking a predetermined time in case when the user does not input a purchasing signal for a particular goods within a predetermined time;
generating a gift presentation icon on the advertising display when the predetermined is elapsed; and
generating a massage that the gift is presented to the user who first clicks the icon at the state of being connected to the web site.

In order to achieve still another object an advertising method using a slide technique of the present invention comprises the steps of:
under the state of being initialized the system when the user connects to the web site and performs a log-in, an advertising display is operated for a plurality of the advertising icons previously stored an advertising message and the public message,
wherein the advertising icons comprise of at least two or more to store the different messages, respectively and continuously moves from one side of the advertising display to the other side of the advertising display.

The advertising display is formed in horizontal or in vertical by a predetermined distance on a web site and the advertising icons are controlled to move from the left to the right and vise versa or from the upper direction to the lower direction and vise versa.

### BRIEF DESCRIPTION OF THE DRAWINGS

Fig. 1 is a block diagram of an electronic commercial dealing mediating system in accordance with the present invention;
Fig. 2 is a block diagram of a server computer of Fig. 1;
Fig. 3 is a block diagram of a purchaser computer of Fig. 1;
Fig. 4 is a block diagram of a seller computer of Fig. 1;
Fig. 5 is a flowchart of a commercial dealing mediating operation in accordance with the present invention;
Fig. 6 is a block diagram of an advertising system in accordance with the present invention;
Fig. 7 is a principal flowchart of an advertising method using an Internet in accordance with the present invention;
Fig. 8 is a flowchart of an advertising method using an Internet;
Fig. 9 is a principal flowchart of an advertising method using a slide technique; and
Fig. 10a, 10b, 10c and 10d are schematic view of an advertising method according to the present invention.

### DETAILED DESCRIPTION OF THE PREFERRED EMBODIMENTS

The embodiments of the present invention will now be in detail described with reference to the accompanying drawings.

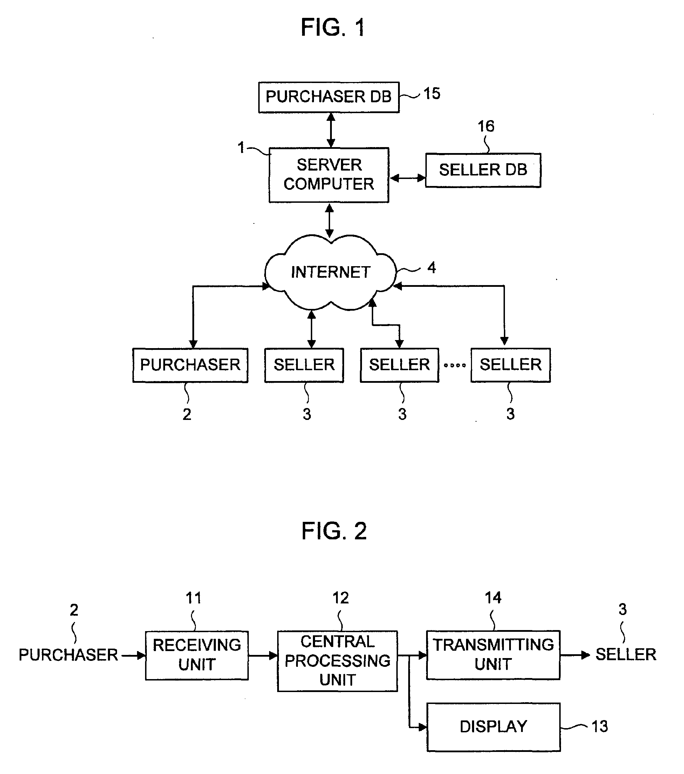

An electronic commercial dealing mediating system using an Internet according to the present invention, as shown in Fig. 1, comprises a mediating server computer 1 for transmitting a goods purchasing signal of a purchaser 2 to sellers 3 through an Internet 4 and for transmitting the goods information of the sellers 3 to the purchaser 2 through an Internet 4. The purchaser 2 and the sellers 3 are connected to the server computer 1 through the Internet 4 if necessary.

The server computer 1, as shown in Fig. 2, comprises a receiving unit 11 for receiving a goods name inputted from the purchaser to purchase through the Internet 4; a CPU 12 for being inputted the goods name from the receiving unit 11 to determine a type of industry thereof, an item and a selling region thereof to transmit to the related sellers 3 who sell the goods of the purchaser's desire; a display 13 for displaying the determined result by the CPU 12, that is, industry of type, the item and the selling region for the goods inputted from the purchaser; and a transmitting unit 14 for transmitting the goods name under a control of the CPU 12 to the related sellers 3.

Furthermore, the server computer 1 includes a purchaser database 15 and a seller database 16 previously stored the private data of the purchaser and the seller who registered to the web site. The purchaser database 15 and the seller database 16 are updated every when the private data for the purchaser and seller is changed.

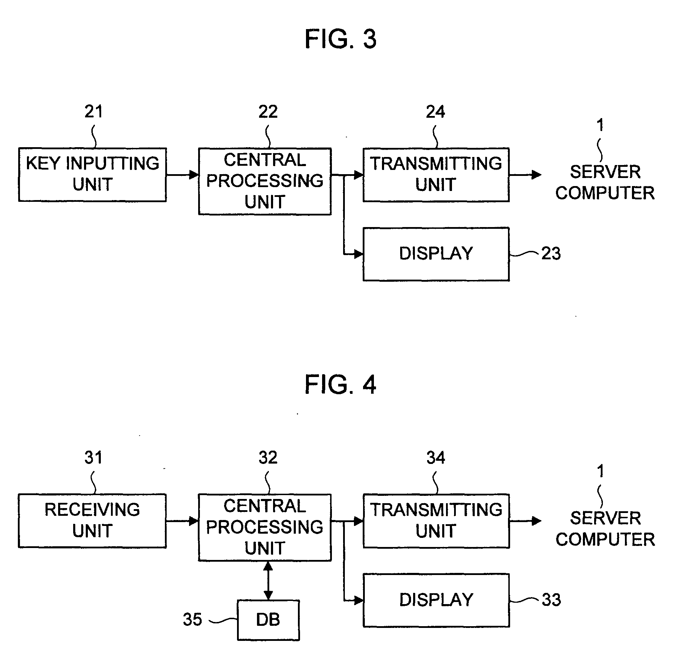

The computer of the purchaser 2, as shown in Fig 3, comprises a key inputting unit 21 for inputting the goods name that want to purchase; a CPU 22 for processing the goods name inputted from the purchaser 2 to transmit to the server computer 1; a display 23 for displaying the processed result by the CPU 22; and a transmitting unit 24 for transmitting the goods name that want to purchase to the server computer 1 under a control of the CPU 22.

The computer of the seller 3, as shown in Fig 4, comprises a receiving unit 31 for receiving the goods name that want to purchase by the purchaser from the server computer 1; a CPU 32 for searching the goods name inputted from the purchaser to provide information for the goods; a display 33 for displaying the searched result by the CPU 32; and a transmitting unit 34 for transmitting information for the goods that want to purchase by the purchaser under the control of the CPU 32 to the server computer 1.

The seller 3 includes a goods database 35 stored the goods information, such as, the price, the size, the manufacturing company, the model name and so on.

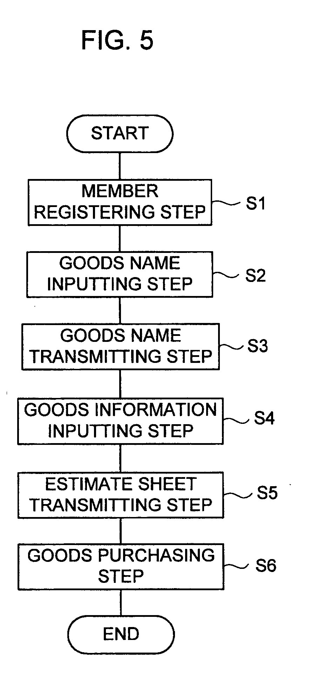

The mediating method by the electronic commercial dealing system having the foregoing description, as shown in Fig. 5, comprises a member registering step S1; a goods name inputting step S2; a goods name transmitting step S3; a goods information inputting step S4; an estimate transmitting step S5; and a goods purchasing step S5.

The member registering step S1 serves to the purchaser and the seller to register as a member to use this site. When the purchaser or the seller inputs private data to the server computer 1, the data is stored to the purchaser database 15 and the seller database 16 by the control of the CPU 12 of the server computer 1.

After registering the purchaser and the seller as a member, the purchaser 2 transmits an account number to the server computer 1 through the Internet 4 for checking whether he/she is real registered person or not so that server computer 1 processes the data inputted from the purchaser 2 to connectedly perform the purchaser account number and the banking system. Furthermore, the seller 3 transmits a certified document for business or others to the server computer 1 for increasing the belief of the purchaser and the seller.

The goods name inputting step S2 serves to the purchaser 2 to input the goods name that want to purchase to the server computer 1 through the Internet 4. The goods name can be inputted by the independent program previously set in the purchaser computer or by the window for connecting with the web site. The goods name inputting step is performed after the purchaser selects the type of industry and an item for the goods that want to purchase.

The goods name transmitting step S3 serves to the server computer 1 to transmit the goods name inputted from the purchaser 2 to the seller 3 who sells the goods of the purchaser's desire.

The seller computer is set the program for automatically receiving the goods name of the purchaser's desire and can automatically rapidly receive the goods name and proviso of the purchaser's desire by the small sized browser while the other program is executed.

The server computer 1 checks the type of industry, the item and the selling region for the inputted goods name from the purchaser to transmit to the seller 3 and can display unnecessary data to the operator to increase belief to each other.

The goods information inputting step S4 serves to the seller 3 to input the information for the goods that want to purchase by the purchaser, such as, the price and the quality and so on to the server computer 1. The seller computer generates a sound while the goods name of the purchaser's desire is received. The seller computer has a window for memo and can express the seller's opinion using the memo window.

The estimate transmitting step S5 serves to the server computer 1 and to the seller computer to store in the server computer 1 the estimate for the goods inputted from the seller 3 by the real time based on the purchasing proviso of the purchaser 2 and to transmit to the purchaser 2 by the real time. That is, the server computer 1 arranges the all information for the goods from all sellers 3 who sell the goods of the purchaser's desire and transmits to the purchaser 2.

The goods purchasing step S5 serves to the purchaser 2 to compare the information from all sellers 3 who sells the goods of the purchaser's desire and to selects the goods that want to purchase under a best proviso. If the purchaser 2 decides to purchase a particular goods among the several goods provided by the several sellers, he transmits the message for purchasing the particular goods to the seller 3 provided the best proviso. Accordingly, the seller 3 who provided the best proviso for selling the goods of the purchaser's desire receives the message from the purchaser 2 and discuss the purchaser the selling method of the goods, payment settlement and the delivery method thereof.

As the foregoing descriptions, the purchaser 2 can collect the information received from the several seller 3 to select the seller provided the best proviso for the goods of his desire and communicates with the seller by the memo, chatting, electronic e-mail, telephone and an Internet phone(voice/image) and can checks the information for the seller through the server computer 1 to increase the belief.

At this time, the seller 3 who receives the opinion by the purchaser 2 also checks the information for the purchaser 2 to increase the belief.

For example, the books mediating method will be described.

When the purchaser 2 inputs the message to purchase a particular book to the server computer 1, the purchaser message is transmitted to the related seller 3 who sells the books that the purchaser wants to purchase.

At this time, the seller computer activates a small browser necessary for the electronic commercial dealing and displays the purchasing message inputted from the purchaser with the sound. Accordingly, the book sellers 3 who sells the books see the message on the monitor and transmit the information for the book with the selling proviso to the server computer 1 so that the server computer 1 collects the several information from the several book sellers 3 to transmit to the purchaser 2.

Accordingly, the purchaser 2 compares the information from the several book seller 3 to select the book with the best proviso and communicates with the seller who provides the best proviso for the delivery.

The present invention as the foregoing description can be applied to the auction and the reverse-auction using the Internet.

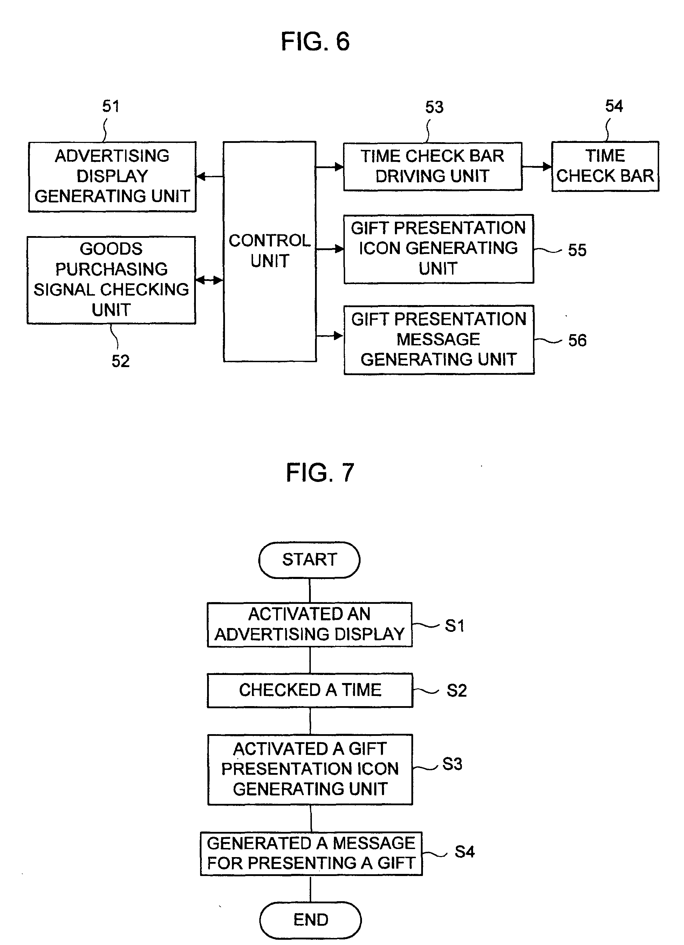

Next, the advertising method will now be described with reference to Figs. 6, 7 and 8.

The advertising system of the present invention, as shown in Fig. 6, comprises of an advertising display generating unit 51; and a purchasing signal checking unit 52 for checking whether the purchaser inputs the purchasing signal within a predetermined time after being connected to the site.

Furthermore, the advertising system of the present invention includes a driving unit 53 for driving a time check bar 54 so that another predetermined time is checked if the purchaser does not input any purchasing signal within the predetermined time at the purchasing signal checking unit; a gift presentation icon generating unit 55 for generating the gift presentation icon when the predetermined time of the time check bar is elapsed; and a gift presentation message generating unit 56 for generating a message that the gift is presented to the user who clicks the icon firstly.

Further, the advertising system of the present invention includes a control unit 50 for controlling the operation of the above-units.

The control unit 50 has a counter therein for counting the predetermined time for the time check bar 54 and the passed time until the goods purchasing signal is inputted from the purchaser.

The control unit 50 is for example a central processing unit.

The advertising method using the system of Fig. 6, as shown in Fig. 7, comprises of an advertising display activating step S1; a time checking step S2; a gift presentation icon generating step S3; and a gift presentation message generating step S4.

The advertising display activating step S1 serves to generating the advertising display under the control of the control unit 50 when the user connects to the web site such as shopping mall.

The time checking step S2 serves to drive the time check bar 54 on the predetermined portion of the advertising display when the goods purchasing signal is not inputted by the purchaser within the predetermined time at the state of being connected to the web site.

The gift presentation icon generating step S3 serves to generate the icon on the advertising display under the control of the control unit 50 when the predetermined time for the time check bar 54 is elapsed.

The gift presentation message generating step S4 serves to generate a message that the gift is presented to the user who clicks the icon firstly.

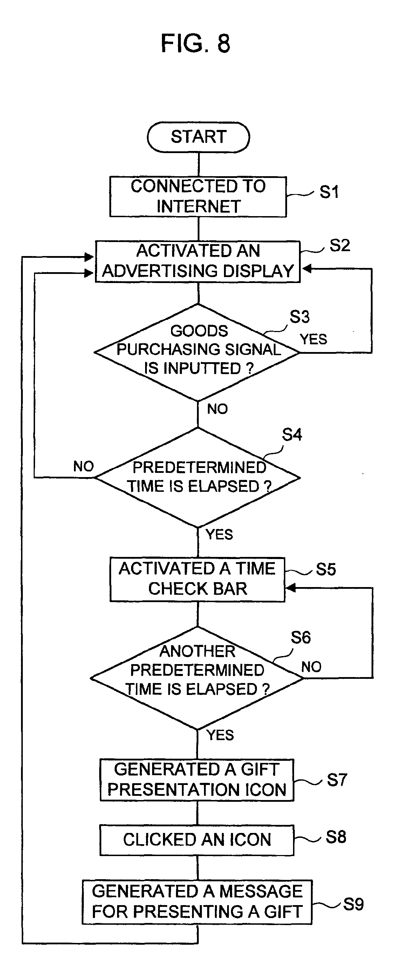

The advertising method using the slide technique will now be described with reference to Fig. 8.

When the purchaser connects to the web site through the Internet at step S1, the advertising display provided from the mediating company is displayed on the web site display by the advertising display generating unit 51 under the control of the control unit 50 at step S2. At this time, almost seller computers maintains the activated state of the web site so that the purchasing opinion inputted from the purchaser can be checked.

Under the state, the fact whether the purchasing signal is inputted by the purchaser within the predetermined time(for example, 3 minutes) is determined by the signal checking unit 52 at step S3.

As a result of that, in case when the purchasing signal is not inputted within the predetermined time at step S4, the time checking bar 54 is driven on the advertising display by the time check bar driving unit 53 under the control of the control unit 50 at step S5.

Under the state of being driven the time check bar 54, the control unit 50 determines whether the predetermined time(for example, 100 seconds) is elapsed.

As a result of determination, in case when the predetermined time is elapsed at step S6, the gift presentation icon is generated on the advertising display by the gift presentation icon generating unit 55 under the control of the control unit 50 at step S7.

Next, when the user who first clicks the icon is determined by the control unit 50 at step S8, the message that the gift is presented to the user who first clicked the icon is generated by the gift presentation message generating unit 56.

Meanwhile, if the purchaser expresses his opinion to purchase the certain goods while the time checking bar 54 is driven, the time check bar 54 is deleted from the advertising display by the time check bar driving unit 53 under the control of the control unit 50.

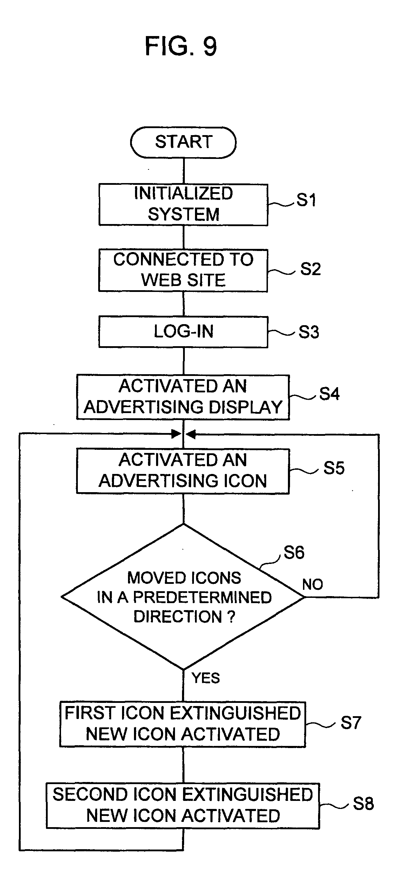

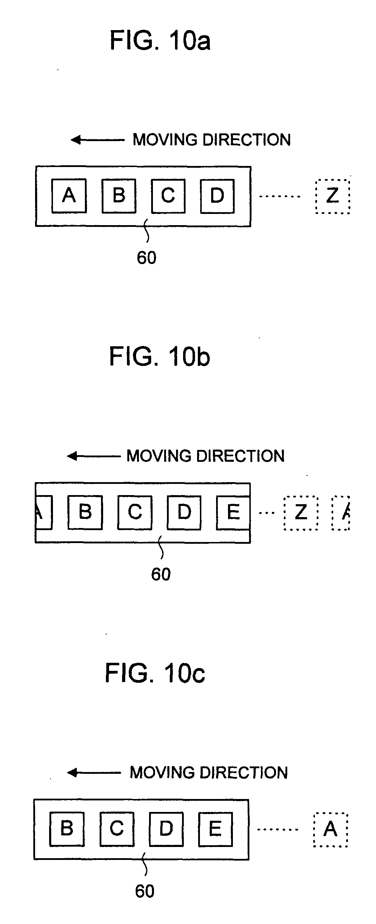

The advertising method using the slide method will now be described with reference to Figs. 9 and 10.

As shown in Fig. 9, under the state of being initialized the system at step S1 when the user connects to the web site at step S2 and performs a log-in at step S3, the advertising display 60 is operated at step S4.

The advertising display 60 serves for a plurality of the advertising icons A - Z previously stored the advertising message and the public message at step S5.

The advertising icons A - Z comprise of at least two or more to store the different messages, respectively and continuously moves from one side of the advertising display 60 to the other side of the advertising display at step S6.

The advertising display 60 is formed in horizontal or in vertical by the predetermined distance on the web site. The advertising icons A - Z are controlled to move from the left to the right and vise versa or from the upper direction to the lower direction and vise versa.

That is, under the state of being moved the icons in the predetermined direction when the user clicks the certain icon, the advertising message stored in the clicked icon is displayed on the advertising display.

For example, as shown in Figs. 10a, 10b and 10c, if the four advertising icons are set to be displayed on the advertising display 60 it is preferable that the four or more advertising icons are controlled to move to the predetermined direction. That is, it is preferable that the number of moving icons are prepared more than that of icons being ' displayed at the fixed state.

In case when the four advertising icons A - D are all displayed on the advertising display 60, the heading advertising icon A is firstly extinguished from the advertising display and new advertising icon E is displayed on the last position of the advertising display 60. After that, the second advertising icon B is extinguished from the advertising display 60 and new advertising icon F is displayed on the last position of the advertising display 60. By this moving method a plurality of advertising icons can be displayed on the advertising display 60 to increase the power of concentration of the user who connected to the web site

Meanwhile, it is possible for all the advertising icons to be fixed on the display during the predetermined time under the control of the control means.

As the foregoing description according to an electronic commercial dealing mediating system using an Internet of the present invention, it is possible for a purchaser and a seller to connect by a real time because of direct dealing for the particular goods so that mediating fee can be decreased.

According to an advertising method using a gift presentation icon of the present invention in case when the user connects to the web site the user can not help interesting to the advertising icon thereby to increase the advertising effect.

According to an advertising method using a slide technique of the present invention because a plurality of moving advertising icons can be displayed on the predetermined advertising display the power of concentration of the user can be increased.

## Claims

1. An electronic commercial dealing mediating system comprising the steps of:
registering a purchaser and a seller as a member for using a mediating system;
inputting a goods name that want to purchase by the purchaser to a server computer through an Internet after the purchaser selects a type of industry, an item and a selling region for the goods that want to purchase through a program or a connecting window on the web;
transmitting the goods name inputted from the purchaser to the related sellers who sell the goods that want to purchase by the purchaser through the server computer;
inputting the goods information, such as, a selling proviso, the price and so on thereof by the seller when the seller receives the goods name inputted by the purchaser with a sound through the server computer, and inputting a selling proviso of the seller through the memo display;
storing an estimate sheet inputted from the seller by the real time at the server computer based on the purchasing proviso of the purchaser and transmitting it to the purchaser by the real time; and
selecting the goods provided a best proviso to purchase by comparing the selling proviso based on the information inputted from the server computer,
wherein the seller computer can automatically receive the purchaser proviso by the small sized browser while the other program is executed, wherein the goods purchasing step performs that the purchaser message for the selected goods is transmitted to the related seller and the seller communicates with the purchaser for the selling method and the purchaser checks the information provided by the seller to select the best seller and communicates with the best seller by the memo, chatting, electronic mail, telephone, Internet phone(voice/image).

2. An advertising method comprising the steps of:
activating an advertising display when the user connects to the web site through an Internet;
checking a predetermined time in case when the user does not input a purchasing signal for a particular goods within a predetermined time;
generating a gift presentation icon on the advertising display when the predetermined is elapsed; and
generating a massage that the gift is presented to the user who first clicks the icon at the state of being connected to the web site.

3. An advertising method using a slide technique comprising the step of:
under the state of being initialized the system when the user connects to the web site and performs a log-in, an advertising display is operated for a plurality of the advertising icons previously stored an advertising message and the public message
wherein the advertising icons comprise of at least two or more to store the different messages, respectively and continuously moves from one side of the advertising display to the other side of the advertising display.

4. The advertising method in accordance with claim 3, wherein the advertising display is formed in horizontal or in vertical by a predetermined distance on a web site and the advertising icons are controlled to move from the left to the right and vise versa or from the upper direction to the lower direction and vise versa.
